# EUROPÄISCHE PATENTSCHRIFT

(11) **EP 3 858 717 B1**
(45) Veröffentlichungstag und Bekanntmachung des Hinweises auf die Patenterteilung: **30.08.2023**
(21) Anmeldenummer: 21154395.4
(22) Anmeldetag: 29.01.2021
(51) Int. Cl.: B62D 67/00, G05B 19/418

(54) **ANLAGE UND VERFAHREN ZUR TEIL- ODER VOLLAUTOMATISIERTEN DEMONTAGE VON GERÄTEN**
SYSTEM AND METHOD FOR PARTIALLY OR FULLY AUTOMATED DISASSEMBLY OF DEVICES
SYSTÈME ET PROCÉDÉ DE DÉMONTAGE PARTIELLEMENT OU ENTIÈREMENT AUTOMATISÉ DES APPAREILS

(30) Priorität: 31.01.2020 DE 102020102514
(43) Veröffentlichungstag der Anmeldung: 04.08.2021
(73) Patentinhaber: Fraunhofer-Gesellschaft zur Förderung der angewandten Forschung e.V., 80686 München (DE)
(72) Erfinder: Noll, Reinhard, 52074 Aachen (DE); Fricke-Begemann, Cord, 52074 Aachen (DE)

(56) Entgegenhaltungen:
- WO-A1-2007/112577
- CN-A- 108 082 334
- DE-A1- 10 214 834
- US-A1- 2009 321 511

## Beschreibung

Die Anmeldung betrifft eine Anlage zur teil- oder vollautomatisierten Demontage von Geräten, insbesondere von Kraftfahrzeugen, zur Wiedergewinnung von Komponenten und Materialfraktionen sowie ein entsprechendes Verfahren.

Bei komplexen industriellen Serienprodukten, wie beispielsweise Werkzeugmaschinen oder Fahrzeugen, insbesondere Personenkraftwagen mit konventionellem Verbrennungsmotor, Hybridantrieb oder elektrischem Antrieb, oder technischen Gebrauchsgütern wie Elektrohaushaltsgeräten, Elektrowerkzeuge, Fahrrädern, E-Bikes, Unterhaltungselektronik, ist es im Zuge der Nachhaltigkeit wünschenswert, nach deren Gebrauch eine Demontage zur Gewinnung von Baugruppen und Funktionsteilen für eine Wiederaufarbeitung und Weiterverwendung sowie zur Gewinnung von Materialfraktionen für ein hochwertiges werkstoffliches oder rohstoffliches Recycling vorzunehmen.

Exemplarisch wird für die zu demontierenden Geräte die Verwertung von Altfahrzeugen betrachtet. Die Altfahrzeugverwertung spielt in Europa bislang nur eine untergeordnete Rolle. Ein großer Anteil der nicht mehr genutzten Fahrzeuge wird in Drittländer exportiert. Nur ein kleinerer Anteil - in Deutschland ca. 10 % - dieser Fahrzeuge wird verwertet.

Herkömmlich werden die Altfahrzeuge bei Schrotthändlern trockengelegt und gegebenenfalls teilentstückt, sofern einzelne Teile visuell als in Ordnung eingeschätzt werden sowie wirtschaftlich entnehmbar und vermarktbar sind. Die Datenbasis dazu sind von den Automobilherstellern bereitgestellte Datenbanken, aus denen - zugeordnet zu Fahrzeugtypen - Bezeichnungen der Teile, Identifikationsnummern und ggf. rudimentäre Materialangaben hervorgehen.

Die Demontage erfolgt vollständig manuell mit Einsatz von Fach- und Hilfskräften unter Zuhilfename konventioneller Werkzeuge. Der Ablauf der Demontage und der Einsatz der dafür erforderlichen Werkzeuge wird von den Werkern in der Regel aufgrund ihrer bisherigen Erfahrungen gewählt.

Das entstückte Altfahrzeug wird anschließend geschreddert und mit konventionellen Sortierverfahren in Materialfraktionen aufgetrennt.

Die bislang eingesetzten herkömmlichen Werkzeuge bedingen einen ganz überwiegend manuellen Demontageprozess, der einen entsprechend hohen Zeitaufwand benötigt. Erfahrungen der Werker bezüglich der Reihenfolge der Demontageschritte und der einzusetzenden Werkzeuge bestimmen den Ablauf. Sie werden im betrieblichen Arbeitsumfeld eventuell weitergegeben und genutzt, aber nicht über die Betriebsebene hinaus systematisch erfasst. Auch die Einschätzung der Nutzbarkeit und Verwertbarkeit entstückter Teile erfolgt meist empirisch und subjektiv. Häufig sind körperlich anstrengende Arbeiten in ergonomisch ungünstigen Körperhaltungen und in einem belastenden Umfeld durchzuführen.

Da daher mit den bisherigen Mitteln der Aufwand für eine gezielte Entstückung oft zu hoch ist, verbleiben Baugruppen, Funktionsteile und Wertstoffe im Massenstrom, der in Schredderanlagen mit hohem spezifischen Energieaufwand zerkleinert wird. Durch den Schreddervorgang und die dabei einwirkenden Kräfte treten in zu sortierenden Wertstofffraktionen Anhaftungen anderer Materialien und Materialverbünde auf, die eine Trennung in einem nachgeschalteten Sortiervorgang - z.B. mit sensorgestützter Sortierung - negativ beeinflussen. Ausbringungseffizienzen und Sortierrichtigkeiten werden herabgesetzt und die Qualität der erzeugten Sortierfraktionen sinkt. Dies gilt u.a. für Wertstoffe, die in relativ kleinen Mengenanteilen vorliegen und die unter erheblichem Aufwand aus einer großen Gesamtmenge heraussortiert werden sollen.

Die Schredderleichtfraktion ist eine der drei beim Schreddern erzeugten Fraktionen, die aus einem teilweise schadstoffhaltigen Gemisch aus Kunststoffen, Gummi, Glas, Restmetallen und weiteren Materialien besteht. Der stofflich verwertete Anteil der Schredderleichtfraktion beträgt derzeit lediglich etwa 50 %.

Stoffkreisläufe sind durch diesen Massenstromansatz, der eine weitgehende Durchmischung der komplexen Eingangsfracht bewirkt, nur zum Teil zu schließen und die erreichten Qualitäten der ausgebrachten Materialfraktionen erlauben nur ein Recycling auf einer niedrigeren Qualitätsstufe ("downcycling").

Die US 2009321511 A1 befasst sich mit einem System und einem Verfahren zum Recyceln und Wiederverwenden von Fertigungserzeugnissen. Dazu wird die Verwendung eines Informationsdatenträgers, wie z.B. eines Barcodes, eines Radiofrequenzidentifikations-Etiketts (RFID-Tag) oder eines anderen maschinenlesbaren Mediums, das beispielsweise mit optischer Zeichenerkennung (OCR) gelesen werden kann, vorgeschlagen, um ein Fertigungserzeugnis zu identifizieren. Alternativ kann auch ein Machine Vision Identification System (MVIS) verwendet werden, um die Identifizierung des Erzeugnisses zu erleichtern. Sobald ein Erzeugnis identifiziert ist, können auch die Materialien und Unterbaugruppen, aus denen es besteht, identifiziert werden und zur Erleichterung der Reparatur, des Austauschs, der Aufarbeitung, Wiedervermarktung und Recycling durch einen Menschen oder Roboter oder einer Kombination davon genutzt werden.

Im weiteren Zusammenhang sei außerdem auf die CN 108082334 verwiesen. Diese Druckschrift beschreibt eine Demontageline zur Demontage von zu verschrottenden Automobilen und ein zugehöriges Informationsmanagementsystem. Die Demontagelinie umfasst dabei unter anderem eine Vorbehandlungslinie, für die umweltschutzgerechte Entfrachtung von Altöl. Das Informationsmanagementsystem der Demontagelinie umfasst ein Informationsmanagementmodul, ein Demontageprozessmanagementmodul und ein Datenabfragemodul. Das Demontageprozessmanagementmodul und das Datenabfragemodul sind parallel miteinander verbunden und tauschen Daten über eine Systemdatenbank aus. Auf diese Weise wird ein intelligenter und informationsgetriebener Betrieb der Demontage von ausgemusterten Personenkraftwagen realisiert.

In der DE 102 14 834 A1 werden ein Verfahren und eine Vorrichtung beschrieben, bei denen Informationen des Fahrzeugherstellers zu Montageabläufen des Fahrzeugs genutzt werden, um daraus Demontageabfolgen abzuleiten und diese durch entsprechend exakte Positionierung des zu behandelnden Altfahrzeugs für dessen Zerlegung anzuwenden. Dieser Ansatz ist nur für einen Fahrzeughersteller umsetzbar, der seine eigenen Fahrzeuge zerlegt, nicht jedoch für vom Hersteller unabhängige Betriebe, da diesen die dafür erforderlichen Informationen aus unternehmensstrategischen Gründen des Fahrzeugherstellers nicht oder nur bruchstückhaft zur Verfügung gestellt werden. Darüber hinaus besteht für solche Demontagebetriebe die Notwendigkeit, herstellerunabhängig Altfahrzeuge zu zerlegen, auch wenn diese während ihrer Nutzungsdauer Veränderungen erfahren haben. Der offenbarte Lösungsansatz zieht überdies nur eine unidirektionale Informationsnutzung vom Montageablauf zum Demontageablauf in Betracht.

Unabhängigen Demontagebetrieben stehen die für eine gezielte Demontage von Baugruppen, Funktionseinheiten und Materialien erforderlichen Informationen nicht oder nur sehr eingeschränkt zur Verfügung. Die von Automobilherstellern bereitgestellten Datenbanken sind nicht hinreichend für eine Beurteilung der in den einzelnen Teilen enthaltenen Wertstoffe, wie beispielsweise Legierungselemente oder Technologiemetalle, und eventuell vorhandenen Gefahrstoffe, wie beispielsweise Flammhemmer in technischen Kunststoffen, Additive, Weichmacher etc.. Informationen zu Demontageabläufen sind nur bruchstückhaft oder überhaupt nicht angegeben. Über erforderliche Anpassungen der Demontageabläufe aufgrund von Varianten der Fahrzeugtypen, Änderungen am Fahrzeug während der Nutzungsphase, Umbauten am Fahrzeug, Austausch von Originalbauteilen durch bauähnliche Teile anderer Hersteller, Veränderungen durch Korrosionsprozesse oder anderen Alterungseffekten und Einwirkungen, liegen in der Regel keine Informationen vor.

Es ist daher die Aufgabe der vorliegenden Erfindung, eine Anlage und ein Verfahren zur teil- oder vollautomatisierten Demontage von Geräten zur Verfügung zu stellen, die eine informationsgeleitete und informationserzeugende Gewinnung hochwertiger Sortierfraktionen von Baugruppen, Funktionsteilen und Materialien unabhängig vom Vorhandensein vollständiger Herstellungsinformationen oder von Änderungen der Gerätekonfiguration aufgrund der jeweiligen Nutzungshistorie ermöglichen.

Diese Aufgabe wird erfindungsgemäß durch eine Anlage mit den Merkmalen des Anspruchs 1 und ein Verfahren gemäß Anspruch 11 gelöst. Vorteilhafte Ausgestaltungen sind in den Unteransprüchen aufgeführt oder lassen sich aus der nachfolgenden Beschreibung entnehmen.

Gemäß der vorliegenden Erfindung umfasst eine Demontagestation einer Anlage zur teil- oder vollautomatisierten Demontage von Geräten sowohl Messeinrichtungen zur Messung geometrischer Eigenschaften als auch Messeinrichtungen zur Messung chemischer und/oder physikalischer Eigenschaften des Geräts, seiner Komponenten und Materialien sowie der wechselseitigen Verbindungen der Komponenten. Die chemischen Eigenschaften beziehen sich insbesondere auf die Materialien, aus denen das Gerät besteht, und auf die Verbindungen, mit denen die Komponenten des Geräts zusammengefügt sind. Durch das Messen der Eigenschaften der Verbindungen lässt sich die Art der Verbindung, wie beispielsweise Schrauben, Nieten, Klemmen, Stecken, Schweißen, Löten oder Kleben, und wie diese am besten zu lösen ist, ermitteln.

Außerdem ist eine Steuereinrichtung der Anlage dazu eingerichtet, Handhabungsvorrichtungen zur Handhabung der Komponenten des Geräts derart zu steuern, dass abgetrennte Komponenten und Materialfraktionen in Abhängigkeit ihrer durch die Messungen ermittelten Eigenschaften verschiedenen Sortierfraktionen von abgetrennten Komponenten und Materialfraktionen zugeordneten Aufnahmevorrichtungen zugeführt werden, aus den aus den Messungen gewonnenen Daten Verfahrensparameter zum Ablauf und zu den einzusetzenden Werkzeugen für die Demontage zu ermitteln und eine Speicherung der aus den Messungen gewonnenen Daten in einer Datenbank der Anlage zum systematischen Aufbau einer Datenbasis für die Demontage weiterer Geräte zu veranlassen.

Da Vorabinformationen zu zu entstückenden Geräten für die Demontage und die zu demontierenden Teile nicht oder nur bruchstückhaft vorhanden sind oder nicht dem aktuell vorliegenden Zustand des Geräts entsprechen, sind diese im Zuge der Demontage in situ mit Sensoren zur Erfassung geometrischer und chemischer Informationen des Fahrzeugs, der Baugruppen, der Funktionsteile und der Materialien zu gewinnen, als digitales Abbild zu speichern und zu verarbeiten. Da die Anlage so aufgebaut ist, dass die Messungen in situ am Gerät vorgenommen werden können, ist eine Vorabvereinzelung von Baugruppen, Funktionseinheiten, Komponenten und Materialien nicht erforderlich.

Der Lösungsansatz verknüpft Vorrichtungen und Verfahren der In-Situ-Messtechnik, der Informationstechnik, der Handhabungstechnik und der Robotik, insbesondere mit kollaborativen Robotern, und vorzugsweise auch der Lasertechnik derart, dass die voll- oder teilautomatisierte stückbezogene Demontage von Geräten schneller, effizienter, qualitätsgesichert und informationsgewinnend im Sinne eines digitalen Abbilds und eines systematischen Wissensaufbaus durchgeführt werden kann. Dadurch werden eventuell im Zuge der Demontage und Beurteilung von Teilen gewonnene Erkenntnisse systematisch erfasst und für künftige Demontageprozesse nutzbar gemacht.

Dies ermöglicht eine Behandlung von Altfahrzeugen verschiedener Typen und von verschiedenen Herstellern, deren Zustand sich im Laufe ihrer Nutzung verändert hat, wie beispielsweise durch Umbauten, Ersatzteile, Reparaturvorgänge, Korrosions-/Alterungsprozesse, Unfälle und für die seitens der Hersteller nur unvollständige oder auch keine Informationen zur Demontage und zu Inhaltsstoffen der Baugruppen, Funktionsteile und Materialien vorliegen.

Im Zuge der Demontage wird durch die In-Situ-Messtechnik die Informationsbasis für künftige Demontageprozesse systematisch ausgebaut. Diese im Demontagebereich erfassten Informationen können umfassen: die gesamte Außenhülle des Geräts zwei- oder dreidimensional mit Farbinformationen; die zwei- oder dreidimensionale Geometrie von Baugruppen, Funktionsteilen und Materialien mit Farbinformationen; die stoffliche Zusammensetzung dieser Teile; eventuell vorhandene Identifikationsnummern der Teile; die Demontageabfolge; das Gewicht der ausgeschleusten Teile; die Chargierung der Sortierfraktionen. Der erforderliche Erfassungsgrad hängt vom Umfang der bereits vorhandenen Informationen ab. Ist ein digitaler Zwilling eines typ- und baugleichen Altfahrzeugs vorhanden, so beschränkt sich die Erfassung auf die Identifikation der zu entstückenden Teile, der tatsächlich demontierten Teile und der Beschickung der Sortierfraktionen.

Gemäß einer bevorzugten Ausgestaltung der Erfindung erfolgt die Demontage teilautomatisiert und es handelt sich bei dem Roboter um einen kollaborativen Roboter zur Unterstützung einer menschlichen Arbeitskraft, wobei ein Datenkommunikationsgerät, insbesondere eine Datenbrille mit Kamera, Lautsprecher und Mikrofon, zur Kommunikation der Arbeitskraft mit der Anlage vorgesehen ist.

Durch die Kombination der In-Situ-Messtechnik mit der teilautomatisierten Demontage können die von der Arbeitskraft gewonnenen Erfahrungen im Demontageablauf in systematischer Weise erfasst und für künftige Demontagevorgänge genutzt werden. Die Qualitätssicherung umfasst sowohl den Demontagevorgang als auch die erzeugten Sortierfraktionen. Damit wird ein sukzessiver systematischer Wissensaufbau und eine Vervollständigung des digitalen Abbilds des Geräts, seiner Teile und Materialien ermöglicht, so dass künftige Demontageabläufe und die Qualifizierung der Sortierfraktionen weiter verbessert werden können. Darüber hinaus werden die Demontageabläufe, die Sortierfraktionen und deren Zusammensetzung und Massenbilanzen etc. systematisch dokumentiert.

Durch die Unterstützung der Demontage mit In-Situ-Messtechnik, Handhabungstechnik, kollaborativen Robotern mit Instrumentenkopf und den Informationen, die der Arbeitskraft vom Leitsystem übermittelt werden und/oder die die Arbeitskraft an das Leitsystem übermittelt und die dort ausgewertet werden, der Datenbank mit dem digitalen Abbild der Baugruppen, Funktionsteile und Materialien und der Demontageabläufe, können die Zielkomponenten schnell und effizient entstückt werden. Die körperliche Arbeitsbelastung wird gesenkt.

Gemäß einer weiteren bevorzugten Ausgestaltung der Erfindung umfasst die Anlage ferner eine Station zur Entfrachtung des Geräts von flüssigen oder gasförmigen Medien, die der Demontagestation vorgeschaltet ist.

Gemäß einer weiteren bevorzugten Ausgestaltung der Erfindung umfasst die Demontagestation ferner eine Prüfvorrichtung zur Prüfung der demontierten Komponenten auf ihre Funktionstüchtigkeit.

Das erfindungsgemäße Verfahren zur teil- oder vollautomatisierten Demontage von Geräten, insbesondere von Kraftfahrzeugen, zur Wiedergewinnung von Komponenten und Materialfraktionen zeichnet sich dadurch aus, dass Messeinrichtungen sowohl geometrische als auch chemische und/oder physikalische Eigenschaften des Geräts, seiner Komponenten und Materialien sowie der wechselseitigen Verbindungen der Komponenten messen, eine Identifikation und Klassifikation der Komponenten und/oder Materialfraktionen in Abhängigkeit ihrer durch die Messungen ermittelten Eigenschaften erfolgt, aus den aus den Messungen gewonnenen Daten Verfahrensparameter zum Ablauf und zu den einzusetzenden Werkzeugen für die Demontage ermittelt werden und die aus den Messungen gewonnenen Daten in einer Datenbank zum systematischen Aufbau einer Datenbasis für die Demontage weiterer Geräte gespeichert werden.

Die im Zusammenhang mit der erfindungsgemäßen Anlage beschriebenen bevorzugten Ausführungsformen und Vorteile gelten auch für das erfindungsgemäße Verfahren.

Weitere Vorteile, Merkmale und Einzelheiten der Erfindung ergeben sich aus der nachfolgenden Beschreibung bevorzugter Ausführungsbeispiele sowie anhand der Zeichnungen.

Es zeigen:
- Figur 1: eine schematische Darstellung eines Demontageprozesses gemäß einem bevorzugten Ausführungsbeispiel der Erfindung;
- Figur 2: eine Draufsicht von oben auf eine Demontagestation gemäß einem bevorzugten Ausführungsbeispiel der Erfindung; und
- Figur 3: eine Draufsicht von vorne auf die Demontagestation aus Figur 2.

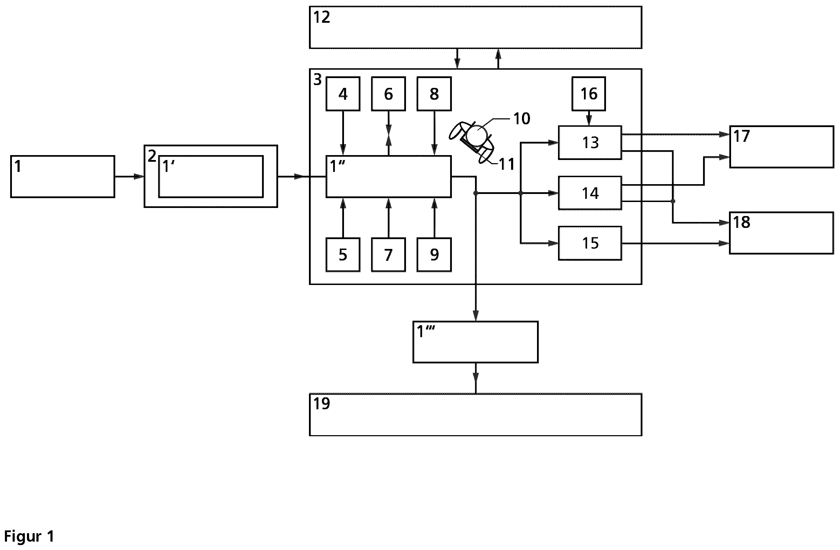

Figur 1 zeigt eine Prozesskette für die Demontage von Altfahrzeugen gemäß einem bevorzugten Ausführungsbeispiel der Erfindung. In diesem Ausführungsbeispiel erfolgt die Demontage teilautomatisiert unter Mitwirkung einer menschlichen Arbeitskraft, im Folgenden als Werker 10 bezeichnet. Ein Altfahrzeug 1 wird in einem ersten Schritt einer Entfrachtungsstation 2 zugeführt und wird von fließend bis harten Schmierstoffen, flüssigen oder gasförmigen Medien sowie Gefahrstoffen entfrachtet, d.h. Treib-, Schmier- und Kühlstoffe werden entnommen. Airbags und andere Sicherheitseinrichtungen werden deaktiviert. Das so vorbereitete Altfahrzeug 1' wird einer Demontagestation 3 zugeführt. Alternativ dazu ist es auch möglich, die Entfrachtungsstation 2 und die Demontagestation 3 räumlich zusammenzulegen, so dass sie sich innerhalb einer Anlage befinden. In der Demontagestation 3 befinden sich eine oder mehrere Handhabungsvorrichtungen 4 mit denen das in die Demontagestation 3 verbrachte Altfahrzeug 1" angehoben und beispielsweise um seine Längsachse gekippt werden kann, um Demontageprozesse zu erleichtern. Weitere Handhabungsvorrichtungen 5 dienen dazu, einzelne Baugruppen oder Komponenten des Fahrzeugs 1" nach oder bei der Demontage zu greifen, zu heben, zu wiegen und diese nach der Ablösung von dem Fahrzeug 1" Aufnahmevorrichtungen 13, 14 und 15 für unterschiedliche Sortierfraktionen zuzuführen. Dabei ist die Aufnahmevorrichtung 13 für Baugruppen vorgesehen, die Aufnahmevorrichtung 14 für Funktionsteile und die Aufnahmevorrichtung 15 für Materialien. Jede dieser Sortierfraktionen kann selbst aus einer Anzahl unterschiedlicher weiterer Sortierfraktionen bestehen.

Mit optischen Messeinrichtungen 6 werden in situ geometrische und chemische Informationen über das Fahrzeug 1" und Teile des Fahrzeugs 1" gewonnen. Geometrische Informationen können sowohl zwei- als auch dreidimensional sein und ergänzend hyperspektrale Farbinformationen enthalten. Zu den ermittelten chemischen Informationen zählen die elementare chemische Zusammensetzung, die Identifikation von Werkstoffen oder Legierungen, die elementare und molekulare chemische Zusammensetzung von Polymeren und Additiven in Polymeren. In einem ersten Schritt wird die Geometrie der Außenhülle des Fahrzeugs 1" allseitig gemessen. Dazu gehört auch die Erfassung der Fahrzeugidentifikationsnummer. Weitere Messungen an Teilen des Fahrzeugs 1" - dazu gehört auch die Erfassung der jeweiligen Teileidentfikationsnummern - erfolgen im Zuge der schrittweisen Demontage von Baugruppen, Funktionsteilen und Materialien. Diese Informationen werden in ein übergeordnetes Leitsystem 12 mit einer Steuerung und einer Datenbank übertragen, mit vorhandenen Daten verknüpft und zur Identifikation der Baugruppen, Funktionsteile und Materialien verwendet, um Entscheidungen über den weiteren Ablauf der Demontage und die Zuordnung eines zu entstückenden Teils zu den Sortierfraktionen zu unterstützen. Das Leitsystem 12 unterstützt den Werker 10 beispielsweise mit einem Vorschlag zur Identifikation des Teils, zum Demontageablauf und zur Sortierung. Der Werker übernimmt entweder den Vorschlag oder er ändert ihn ab oder er trifft eine eigene Entscheidung über die weitere Vorgehensweise, die im Leitsystem 12 erfasst wird.

Mindestens ein kollaborativer Roboter 7 unterstützt die Arbeiten des Werkers 10 für die Informationserfassungs- und Demontageschritte. An einer Hand des Roboters 7 befindet sich ein Instrumententräger mit mindestens einem Bearbeitungs- oder Messwerkzeug. Ein Bearbeitungswerkzeug ist eine Laserbearbeitungsvorrichtung 8, wie beispielsweise ein Laserschneidsystem oder Teile eines solchen Systems wie ein Laserbearbeitungskopf. Dieser ist auf dem Instrumententräger mit dem kollaborativen Roboter 7 zur Führung eines Bearbeitungsstrahls relativ zur zu demontierenden Komponente verbunden. Der kollaborative Roboter 7 mit dem Laserbearbeitungskopf wird vom Werker 10 an einzelne Teile des Fahrzeugs 1" zur Herstellung von Zugängen für zu entstückende Teile oder zur Trennung von Befestigungselementen solcher zu entstückender Teile herangeführt. Die folgenden Bearbeitungsvorgänge sind vorzugsweise Schneid- oder Trennvorgänge an Teilen der Karosserie, an Konstruktions- und Halteelementen oder an anderen Baugruppen oder Funktionsteilen des Fahrzeugs 1". Dazu gehören das Durchtrennen von Säulen, Stegen oder Flanschen, das Ausschneiden von Nieten oder Schrauben und die Erzeugung von Löchern oder Ausschnitten. Die erforderlichen Bewegungsabläufe des Laserbearbeitungskopfs sind entweder in der Datenbank des Leitsystems 12 hinterlegt und werden für den betreffenden Entstückungsvorgang abgerufen oder der Bewegungsablauf wird vor Ort durch den Werker 10 eingelernt oder vom Leitsystem 12 automatisch bestimmt und dann vom kollaborativen Roboter 7 in Kombination mit der Laserbearbeitungsvorrichtung 8 ausgeführt.

An einer Hand des kollaborativen Roboters 7 sind weiterhin mechanische Werkzeuge 9 zum Schneiden von Metallteilen, wie Scheren oder Nibbler, sowie Greifer und Schrauber montierbar, die für Bearbeitungs- und Demontagevorgänge zur Erstellung eines Zugangs zu einer Zielkomponente und deren Ablösung einsetzbar sind. Laserbearbeitungskopf und mechanische Werkzeuge 9 können entweder alternativ oder gleichzeitig mit der Hand des kollaborativen Roboters 7 verbunden sein.

Der Werker 10 trägt ein Datenkommunikationsgerät 11, beispielsweise eine Datenbrille mit Kamera, Lautsprecher und Mikrofon, über das ihm einerseits - soweit vorhanden - Abläufe der Demontage angezeigt werden, sowie Informationen zur Identifikation der zu entstückenden Teile, oder über das er andererseits selbst Informationen, die er im Zuge einer Demontage und aufgrund ihm angezeigter in situ gewonnener Messergebnisse abgeleitet hat, zum Leitsystem 12 übertragen kann. Im ersten Fall werden ihm kontextbezogene physikalische und chemische Informationen der Baugruppen, Funktionsteile und Materialien angezeigt, sofern diese in der Datenbank des Leitsystems 12 bereits verfügbar sind oder solche, die in situ gewonnen werden. Mit diesen Informationen entstückt der Werker 10 Schritt für Schritt unter Zuhilfenahme eines oder mehrerer kollaborativer Roboter 7 mit den Werkzeugen 8, 9 an der Hand dieser Roboter 7, eventuell weiterer vom Werker selbst geführter Werkzeuge (in Bild 1 nicht dargestellt) sowie der Handhabungsvorrichtungen 4, 5 das Altfahrzeug 1" und schleust die abgelösten Teile in die Aufnahmevorrichtungen 13, 14 und 15 für die zugehörigen Sortierfraktionen.

Baugruppen und Funktionsteile werden mittels einer nachgeschalteten Prüfvorrichtung 16 hinsichtlich ihres Zustands und ihrer Funktionstüchtigkeit untersucht. Die Ergebnisse werden an das Leitsystem 12 übertragen. Für jede Sortierfraktion - und deren weitere Untergliederungen - liegen im Leitsystem 12 die vor und im Demontageablauf gewonnenen Informationen, wie Teileidentifikation, Teileidentifikationsnummern, Geometrie- und hyperspektrale Farbinformationen, chemische Zusammensetzung und Zustand, zugeordnet zu jedem sortierten Teil vor. Die beiden Sortierfraktionen Baugruppen und Funktionsteile werden unter Nutzung dieser Informationen als wiederverwendbare Teile oder als aufzuarbeitende Gebrauchtteile der weiteren Verwertung 17 oder auch der werkstofflichen oder rohstofflichen Verwertung, d. h. einem Recycling 18, zugeführt. Die dritte Sortierfraktion mit angereicherten Materialien, wie Legierungen, Technologiemetallen, Elektronik, technischen Kunststoffen, Glas, Keramik, Teilen aus glasfaserverstärkten oder kohlefaserverstärkten Kunststoffen, wird unter Nutzung dieser Informationen einem darauf abgestimmten werk- oder rohstofflichen Recycling 18 zugeführt.

Das entstückte Fahrzeug 1‴ wird schließlich der herkömmlichen Verwertungslinie 19 zugeführt.

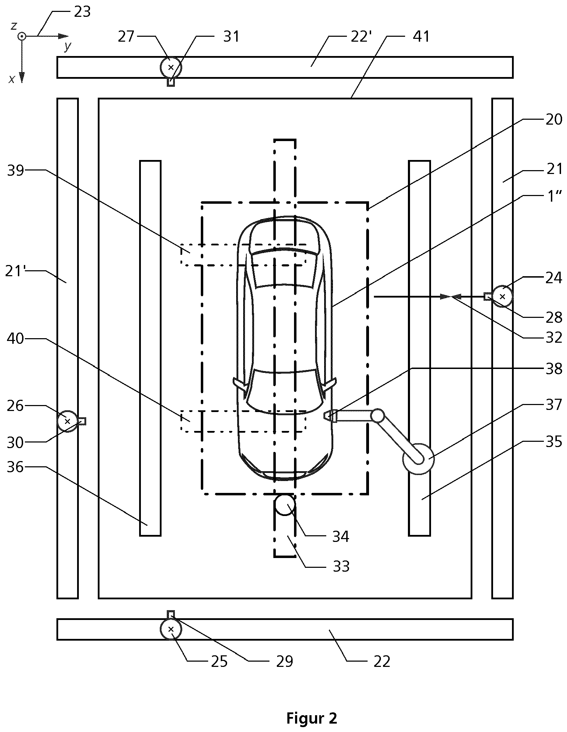

Figur 2 zeigt beispielhaft eine Draufsicht auf eine bevorzugte Ausführungsform einer Demontagestation 3. Am linken oberen Rand von Figur 2 ist ein Koordinatensystem 23 eingezeichnet. Das Fahrzeug 1" befindet sich in einem Zielkorridor 20. Für eine erfindungsgemäße Demontage des Fahrzeugs 1" ist es ausreichend, wenn es sich innerhalb des Zielkorridors 20 befindet. Eine exakte Positionierung des Fahrzeugs 1" ist nicht erforderlich. Verfahrachsen 21, 21' und 22, 22' sind parallel zu den Längsseiten und Schmalseiten des Zielkorridors 20 ausgerichtet. An den Verfahrachsen 21, 21' und 22, 22' sind jeweils Halterungen 24 bis 27 befestigt, an denen jeweils optische Sensoren oder Sensorgruppen 28 bis 31 für die Messung der 2D- und 3D-Geometrie sowie von hyperspektralen Farbinformationen montiert sind. Die Sensoren oder Sensorgruppen 28 bis 31 empfangen eine Messstrahlung 32 (hier vereinfachend nur für den Sensor oder die Sensorgruppe 28 dargestellt). Zu den verwendeten Sensoren zählen beispielsweise Laserlichtschnittsensoren, Laufzeitsensoren und 2D/3D-Kameras. Die Halterungen 24 bis 27 können zur Vermessung der Seiten des Fahrzeugs 1" jeweils entlang der Verfahrachsen 21, 22, 21' und 22' verfahren werden. Es kann auch vorgesehen sein, dass die Sensoren oder Sensorgruppen 28 bis 31 in den Halterungen in z-Richtung verfahrbar sind, um den Messbereich zu vergrößern.

Unterhalb des Fahrzeugs 1" und unterhalb dessen Aufstellfäche (xy-Ebene) befindet sich eine weitere Verfahrachse 33 mit einer Sensoranordnung 34 mit der die Geometrie der Unterseite des Fahrzeugs vermessen werden kann.

Auf weiteren Verfahrachsen 35, 36 sind kollaborative Roboter 37 montiert, an deren Hand sich jeweils ein Instrumentenkopf 38 befindet, der mindestens eine Bearbeitungsvorrichtung für die Demontage umfasst, um beispielsweise folgende Aufgaben auszuführen: Laserschneiden, Schrauben, Greifen, Nibbeln, Hebeln. In einer weiteren Ausführungsform enthält der Instrumentenkopf 38 ein spektroskopisches Analysegerät, das beispielsweise auf Laser-Emissionsspektrometrie, NIR-Spektroskopie oder Raman-Spektroskopie basiert, um die chemische Zusammensetzung zu entstückender Teile in situ zu ermitteln.

Handhabungsvorrichtungen 39, 40 erlauben ein Anheben des Fahrzeugs 1" in z-Richtung sowie beispielsweise eine Kippung um die x-Achse zur Erleichterung von Demontagevorgängen.

Im Bereich der gemeinsamen Arbeitszone von Werker und kollaborativem Roboter 37 befindet sich ein Überwachungsfeld 41, mit dessen Hilfe festgestellt werden kann, an welchen Positionen sich der oder die Werker befinden. Gegebenenfalls ist darüber hinaus der kollaborative Roboter 37 mit Näherungs- und Kollisionsdetektoren ausgestattet. Diese Informationen werden verwendet, um unerwünschte Annäherungen und Kollisionen zwischen Roboter und Werker oder unzulässige Expositionen des Werkers mit Laserstrahlung oder mechanischen Werkzeugen aufgrund von Bearbeitungsvorgängen auf ein zulässiges Maß zu reduzieren oder vollständig auszuschließen.

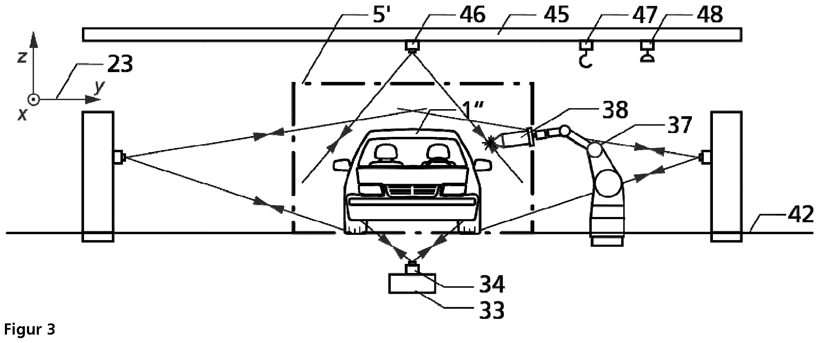

Figur 3 zeigt eine Vorderansicht der Demontagestation 3, was einer Blickrichtung entgegen der x-Achse des Koordinatensystems 23 entspricht. In dieser Ansicht sind der Einfachheit halber nicht alle Komponenten aus Figur 2 dargestellt. Der Boden 42 der Demontagestation 3 liegt in der xy-Ebene. Die Verfahrachse 33 befindet sich unterhalb der Ebene 42. Auf ihr ist die Sensoranordnung 34 montiert, die auf diese Weise entlang der x-Achse unterhalb des Fahrzeugs 1" verfahren werden und dabei die Fahrzeugunterseite vermessen kann.

An einem Portal 45 ist eine weitere Sensoranordnung 46 montiert, die mit dem Portal 45 in x-Richtung verfahren werden kann und so das Fahrzeug 1" von oben vermessen kann. Die Sensoranordnung 46 ist außerdem in y-Richtung verschiebbar. An dem Portal 45 befinden sich weitere in y-Richtung verschiebbar angeordnete Hebe-, Greif- und Wiegezeuge 47, 48. Diese werden zum Heben, Greifen von entstückten Baugruppen, Funktionsteilen und Materialien am jeweiligen Demontageort sowie zum Wiegen einzelner Stücke verwendet und transportieren diese Stücke zu den Aufnahmevorrichtungen für die Sortierfraktionen (in Figur 3 nicht dargestellt).

Die gewonnenen Sortierfraktionen können entweder als Baugruppen und Funktionsteile wiederverwendet werden - eventuell nach einer für eine Wiederverwendung erforderlichen Prüfung und Aufbereitung - oder sie werden einer werkstoffspezifischen Weiterverarbeitung zugeführt.

Die gewonnenen Materialfraktionen zeichnen sich entweder durch einen hohen Anreicherungsgrad von Wertstoffen, wie z.B. Legierungen, technischen Kunststoffen, Gläsern/Keramiken, Technologiemetallen, Elektroniken, Batterien, Energiespeichern und Magneten aus, oder sie enthalten Materialien, die in der herkömmlichen Altfahrzeugverwertung in Massenstromverfahren nicht erwünscht sind. Dies sind beispielsweise Polymerwerkstoffe mit Additiven, wie Flammhemmern, Stabilisatoren, Weichmachern, Pigmenten oder ähnlichen oder Batterien oder Energiespeicher.

Das so entstückte Gerät wird im Weiteren konventionellen, auf Massenstromdurchsatz ausgelegten Verwertungsverfahren zugeführt. Dies sind z.B. die Verfahren: Pressen, Schreddern, Sortierung der Schredderfraktionen, Einschmelzen, thermische Verwertung, Deponierung.

Die vorstehend beschriebenen Ausführungsbeispiele der Erfindung beziehen sich alle auf die Demontage von Altfahrzeugen. Sie sind aber ebenso auf andere Geräte, vorzugsweise komplexe industrielle Serienprodukte, wie beispielsweise Werkzeugmaschinen anwendbar.

Durch die automationsunterstützte gezielte physikalische Entstückung von Geräten, vorgelagert einer anschließenden Massenstrombehandlung des Rests, werden in effizienter Weise auf hohem Ordnungsniveau Sortierfraktionen gewonnen, die spezifischen Weiterverarbeitungen zugeführt werden können. So kann einerseits die Nutzungsdauer von Baugruppen und Funktionsteilen erweitert und erhöht werden sowie andererseits ein werk- und rohstoffliches Recycling auf hohem Qualitätsniveau umgesetzt werden. Ein downcycling durch Vermischung und Querkontamination wird vermieden. Teile mit problematischen Inhaltsstoffen können separiert und einer gesonderten Behandlung zugeführt werden. Der im Massenstrom zu behandelnde Rest wird dadurch von diesen Stoffen entfrachtet und Kontaminationen werden reduziert oder vollständig vermieden. Dadurch kann die dem Schreddern nachgeschaltete Sortierung verbessert werden, indem die damit erzeugbaren Sortierfraktionen einen höheren Reinheitsgrad und eine höhere Qualitätsstufe erreichen.

## Patentansprüche

1. Anlage zur teil- oder vollautomatisierten Demontage von Geräten (1), insbesondere von Kraftfahrzeugen, zur Wiedergewinnung von Komponenten und Materialfraktionen umfassend:
eine Demontagestation (3) mit
ersten Handhabungsvorrichtungen (4; 39, 40) zur Handhabung des Geräts (1");
zweiten Handhabungsvorrichtungen (5; 47, 48) zur Handhabung der Komponenten des Geräts (1");
Messeinrichtungen (6; 28, 29, 30, 31, 34, 46) zur In-Situ-Messung von Eigenschaften des Geräts (1 "), seiner Komponenten und Materialien;
einem Roboter (7; 37) zur Führung eines Instrumentenkopfes (38); und
verschiedenen Sortierfraktionen von demontierten Komponenten und Materialfraktionen zugeordneten Aufnahmevorrichtungen (13, 14, 15); und
ein Leitsystem (12) mit
einer Datenbank zur Speicherung von Informationen über das Gerät (1"); und
einer Steuereinrichtung zur Verarbeitung von aus den Messungen gewonnenen Daten sowie von Daten aus der Datenbank und zur Steuerung der ersten und zweiten Handhabungsvorrichtungen (4, 5), der Messeinrichtungen (6) und des Roboters (7; 37);
**dadurch gekennzeichnet, dass**
die Messeinrichtungen (6; 28, 29, 30, 31, 34, 46) sowohl Messeinrichtungen zur Messung geometrischer Eigenschaften als auch Messeinrichtungen zur Messung chemischer und/oder physikalischer Eigenschaften des Geräts (1"), seiner Komponenten und Materialien sowie der wechselseitigen Verbindungen der Komponenten umfassen; und
die Steuereinrichtung dazu eingerichtet ist, die zweiten Handhabungsvorrichtungen (5; 47, 48) derart zu steuern, dass demontierte Komponenten und Materialfraktionen in Abhängigkeit ihrer durch die Messungen ermittelten Eigenschaften den verschiedenen Aufnahmevorrichtungen (13, 14, 15) zugeführt werden, aus den aus den Messungen gewonnenen Daten Verfahrensparameter zum Ablauf und zu den einzusetzenden Werkzeugen (8, 9) für die Demontage zu ermitteln und eine Speicherung der aus den Messungen gewonnenen Daten in der Datenbank zum systematischen Aufbau einer Datenbasis für die Demontage weiterer Geräte zu veranlassen.

2. Anlage nach Anspruch 1,
**dadurch gekennzeichnet, dass**
der Instrumentenkopf (38) des Roboters (7; 37) einen Laserbearbeitungskopf und/oder mechanische Werkzeuge (9) zum Schneiden, Nibbeln, Greifen, Hebeln, Schleifen, Bohren, Fräsen und/oder Schrauben umfasst.

3. Anlage nach einem der vorangehenden Ansprüche,
**dadurch gekennzeichnet, dass**
die Messeinrichtungen (6) mindestens ein spektroskopisches Analysegerät umfassen, wobei vorzugsweise zumindest Teile des Sende- und des Empfangsstrahlengangs des spektroskopischen Analysegeräts im Instrumentenkopf (38) des Roboters (7; 37) enthalten sind.

4. Anlage nach einem der vorangehenden Ansprüche,
**dadurch gekennzeichnet, dass**
die Messeinrichtungen (6) eine Waage umfassen.

5. Anlage nach einem der vorangehenden Ansprüche,
**dadurch gekennzeichnet, dass**
die Messeinrichtungen (6; 28, 29, 30, 31, 34, 46) optische Sensoren, insbesondere Laserlichtschnittsensoren und/oder Laufzeitsensoren und/oder 2D-Kameras und/oder 3D-Kameras, umfassen.

6. Anlage nach einem der vorangehenden Ansprüche,
**dadurch gekennzeichnet, dass**
die Demontage teilautomatisiert erfolgt und es sich bei dem Roboter (7; 37) um einen kollaborativen Roboter zur Unterstützung einer menschlichen Arbeitskraft (10) handelt, wobei ein Datenkommunikationsgerät (11), insbesondere eine Datenbrille mit Kamera, Lautsprecher und Mikrofon, zur Kommunikation der Arbeitskraft (10) mit der Anlage vorgesehen ist.

7. Anlage nach einem der vorangehenden Ansprüche,
**dadurch gekennzeichnet, dass**
die Anlage ferner eine Station (2) zur Entfrachtung des Geräts (1') von fließend bis harten Schmierstoffen und/oder flüssigen oder gasförmigen Medien und/oder von Gefahrstoffen umfasst, die der Demontagestation (3) vorgeschaltet ist.

8. Anlage nach einem der vorangehenden Ansprüche,
**dadurch gekennzeichnet, dass**
die Demontagestation (3) ferner eine Prüfvorrichtung (16) zur Prüfung der demontierten Komponenten auf ihre Funktionstüchtigkeit umfasst.

9. Anlage nach einem der vorangehenden Ansprüche,
**dadurch gekennzeichnet, dass**
der Instrumentenkopf (38) des Roboters (7; 37) austauschbar ist.

10. Anlage nach einem der Ansprüche 1 bis 8,
**dadurch gekennzeichnet, dass**
die Anlage mehrere Roboter (7; 37) mit unterschiedlichen Funktionen umfasst.

11. Verfahren zur teil- oder vollautomatisierten Demontage von Geräten (1), insbesondere von Kraftfahrzeugen, zur Wiedergewinnung von Komponenten und Materialfraktionen umfassend die folgenden Schritte, die den Erfordernissen des Demontageablaufs entsprechend ein- oder mehrfach zu durchlaufen sind:
Positionierung des Geräts (1") in einem Bearbeitungsbereich (20) mittels erster Handhabungsvorrichtungen (4; 39, 40);
Messen von Eigenschaften des Geräts (1"), seiner Komponenten und Materialien in situ mittels Messeinrichtungen (6; 28, 29, 30, 31, 34, 46);
Verarbeitung der aus den Messungen gewonnenen Daten zur Identifikation und Klassifizierung von Komponenten und/oder Materialfraktionen des Geräts (1") und zur Ermittlung einer Demontageabfolge mittels einer Steuereinrichtung;
Demontieren von Komponenten und/oder Materialfraktionen des Geräts (1") mittels von mindestens einem Roboter (7; 37) geführten Werkzeugen (8, 9); und
Zuführen der Komponenten und/oder Materialfraktionen zu verschiedenen Sortierfraktionen zugeordneten Aufnahmevorrichtungen (13, 14, 15) mittels zweiter Handhabungsvorrichtungen (5; 47, 48) in Abhängigkeit der erfolgten Identifikation und Klassifikation;
**dadurch gekennzeichnet, dass**
die Messeinrichtungen (6; 28, 29, 30, 31, 34, 46) sowohl geometrische als auch chemische und/oder physikalische Eigenschaften des Geräts (1"), seiner Komponenten und Materialien sowie der wechselseitigen Verbindungen der Komponenten messen;
die Identifikation und Klassifikation der Komponenten und/oder Materialfraktionen in Abhängigkeit ihrer durch die Messungen ermittelten Eigenschaften erfolgt;
aus den aus den Messungen gewonnenen Daten Verfahrensparameter zum Ablauf und zu den einzusetzenden Werkzeugen (8, 9) für die Demontage ermittelt werden; und
die aus den Messungen gewonnenen Daten in einer Datenbank zum systematischen Aufbau einer Datenbasis für die Demontage weiterer Geräte gespeichert werden.

12. Verfahren nach Anspruch 11,
**dadurch gekennzeichnet, dass**
zu Beginn der Demontage die Geometrie der Außenhülle des Geräts (1") allseitig gemessen wird.

13. Verfahren nach Anspruch 11 oder 12 ,
**dadurch gekennzeichnet, dass**
eine Prüfung der demontierten Komponenten auf ihre Funktionstüchtigkeit erfolgt.

14. Verfahren nach einem der Ansprüche 11 bis 13,
**dadurch gekennzeichnet, dass**
die Demontage teilautomatisiert erfolgt und es sich bei dem Roboter (7; 37) um einen kollaborativen Roboter handelt, der eine menschliche Arbeitskraft (10) unterstützt.

15. Verfahren nach einem der Ansprüche 11 bis 14,
**dadurch gekennzeichnet, dass**
das Gerät (1') vor seiner Demontage von fließend bis harten Schmierstoffen und/oder flüssigen oder gasförmigen Medien und/oder von Gefahrstoffen entfrachtet wird.

## Claims

1. System for partially or fully automated disassembly of devices (1), in particular of motor vehicles, for the recovery of components and material fractions, comprising:
a disassembly station (3) having
first handling devices (4; 39, 40) for handling the device (1");
second handling devices (5; 47, 48) for handling the components of the device (1");
measuring devices (6; 28, 29, 30, 31, 34, 46) for the in-situ measurement of properties of the device (1"), its components and materials;
a robot (7; 37) for guiding an instrument head (38); and
receiving devices (13, 14, 15) assigned to different sorting fractions of disassembled components and material fractions; and
a control system (12) having
a database for storing information about the device (1"); and
a control device for processing data obtained from the measurements and data from the database and for controlling the first and second handling devices (4, 5), the measuring devices (6) and the robot (7; 37);
**characterized in that**
the measuring devices (6; 28, 29, 30, 31, 34, 46) comprise both measuring devices for measuring geometric properties and measuring devices for measuring chemical and/or physical properties of the device (1"), its components and materials and the mutual connections of the components; and
the control device is set up to control the second handling devices (5; 47, 48) in such a way that disassembled components and material fractions are fed to the various receiving devices (13, 14, 15) depending on their properties determined by the measurements, to determine process parameters relating to the process and to the tools (8, 9) to be used for the disassembly from the data obtained from the measurements, and to arrange for the storage of the data obtained from the measurements in the database for the systematic building of a database for the disassembly of further devices.

2. System according to Claim 1,
**characterized in that**
the instrument head (38) of the robot (7; 37) comprises a laser machining head and/or mechanical tools (9) for cutting, nibbling, gripping, levering, grinding, drilling, milling and/or screwing.

3. System according to either of the preceding claims, **characterized in that**
the measuring devices (6) comprise at least one spectroscopic analysis device, wherein, preferably, at least parts of the transmitting and the receiving beam path of the spectroscopic analysis device are contained in the instrument head (38) of the robot (7; 37).

4. System according to one of the preceding claims, **characterized in that**
the measuring devices (6) comprise a weighing scale.

5. System according to one of the preceding claims,
**characterized in that**
the measuring devices (6; 28, 29, 30, 31, 34, 46) comprise optical sensors, in particular laser light section sensors and/or time-of-flight sensors and/or 2D cameras and/or 3D cameras.

6. System according to one of the preceding claims,
**characterized in that**
the disassembly is carried out in a partly automated manner and the robot (7; 37) is a collaborative robot for assisting a human workforce (10), wherein a data communications device (11) is provided, in particular smart glasses with a camera, loudspeaker and microphone, for the communication of the workforce (10) with the system.

7. System according to one of the preceding claims,
**characterized in that**
the system further comprises a station (2) for freeing the device (1') of fluid to hard lubricants and/or liquid or gaseous media and/or of hazardous materials, which is connected upstream of the disassembly station (3).

8. System according to one of the preceding claims,
**characterized in that**
the disassembly station (3) further comprises a testing device (16) for testing the disassembled components for their serviceability.

9. System according to one of the preceding claims,
**characterized in that**
the instrument head (38) of the robot (7; 37) is interchangeable.

10. System according to one of Claims 1 to 8,
**characterized in that**
the system comprises a plurality of robots (7; 37) with different functions.

11. Method for partially or fully automated disassembly of devices (1), in particular of motor vehicles, for the recovery of components and material fractions, comprising the following steps which, corresponding to the requirements of the disassembly sequence, are to be run through once or repeatedly:
positioning the device (1") in a processing region (20) by means of first handling devices (4; 39, 40);
measuring properties of the device (1"), its components and materials in situ by means of measuring devices (6; 28, 29, 30, 31, 34, 46);
processing the data obtained from the measurements for the identification and classification of components and/or material fractions of the device (1") and for determining a disassembly sequence by means of a control device;
disassembling components and/or material fractions of the device (1") by means of tools (8, 9) guided by at least one robot (7; 37); and
feeding the components and/or material fractions to receiving devices (13, 14, 15) assigned to different sorting fractions by means of second handling devices (5; 47, 48), depending on the identification and classification carried out;
**characterized in that**
the measuring devices (6; 28, 29, 30, 31, 34, 46) measure both geometric and chemical and/or physical properties of the device (1"), its components and materials and the mutual connections of the components;
the identification and classification of the components and/or material fractions is carried out depending on their properties determined by the measurements;
process parameters relating to the process and to the tools (8, 9) to be used for the disassembly are determined from the data obtained from the measurements; and
the data obtained from the measurements are stored in a database for the systematic building of a database for the disassembly of further devices.

12. Method according to Claim 11,
**characterized in that**
at the start of the disassembly the geometry of the outer shell of the device (1") is measured on all sides.

13. Method according to Claim 11 or 12,
**characterized in that**
the disassembled components are tested for their serviceability.

14. Method according to one of Claims 11 to 13,
**characterized in that**
the disassembly is carried out in a partly automated manner and the robot (7; 37) is a collaborative robot which assists a human workforce (10).

15. Method according to one of Claims 11 to 14,
**characterized in that**
before its disassembly the device (1') is freed of fluid to hard lubricants and/or liquid or gaseous media and/or of hazardous materials.

## Revendications

1. Installation pour le démontage partiellement ou entièrement automatisé d'appareils (1), en particulier de véhicules automobiles, en vue de récupérer des composants et des fractions de matériaux, comprenant :
un poste de démontage (3) comprenant des premiers dispositifs de manipulation (4 ; 39, 40) pour manipuler l'appareil (1") ;
des deuxièmes dispositifs de manipulation (5 ; 47, 48) pour manipuler les composants de l'appareil (1") ;
des équipements de mesure (6 ; 28, 29, 30, 31, 34, 46) pour la mesure in situ de propriétés de l'appareil (1"), de ses composants et de ses matériaux ;
un robot (7 ; 37) pour guider une tête d'instrument (38) ; et
des dispositifs de réception (13, 14, 15) associés à différentes fractions de tri de composants démontés et de fractions de matériaux démontés ; et
un système de guidage (12) comprenant
une banque de données pour stocker des informations concernant l'appareil (1") ; et
un équipement de commande pour traiter des données obtenues à partir des mesures ainsi que des données de la banque de données et pour commander les premiers et les deuxièmes dispositifs de manipulation (4, 5), les équipements de mesure (6) et le robot (7 ; 37) ;
**caractérisée en ce que**
les équipements de mesure (6 ; 28, 29, 30, 31, 34, 46) comprennent à la fois des équipements de mesure pour mesurer des propriétés géométriques et des équipements de mesure pour mesurer des propriétés chimiques et/ou physiques de l'appareil (1"), de ses composants et de ses matériaux ainsi que les liens réciproques entre les composants ; et
l'équipement de commande est conçu pour commander les deuxièmes dispositifs de manipulation (5 ; 47, 48) de telle sorte que des composants démontés et des fractions de matériaux démontés sont amenés aux différents dispositifs de réception (13, 14, 15) en fonction de leurs propriétés déterminées par les mesures, pour déterminer à partir des données obtenues par les mesures des paramètres de procédé concernant la séquence et les outils (8, 9) à mettre en œuvre pour le démontage, et pour provoquer un stockage des données obtenues par les mesures dans la banque de données pour la création systématique d'une base de données pour le démontage d'autres appareils.

2. Installation selon la revendication 1, **caractérisée en ce que** la tête d'instrument (38) du robot (7 ; 37) comprend une tête d'usinage au laser et/ou des outils mécaniques (9) pour couper, grignoter, saisir, faire levier, redresser, percer, fraiser et/ou visser.

3. Installation selon l'une quelconque des revendications précédentes, **caractérisée en ce que** les équipements de mesure (6) comprennent au moins un appareil d'analyse spectroscopique, dans laquelle de préférence au moins des parties de la trajectoire du faisceau d'émission et de réception de l'appareil d'analyse spectroscopique sont contenues dans la tête d'instrument (38) du robot (7 ; 37).

4. Installation selon l'une quelconque des revendications précédentes, **caractérisée en ce que** les équipements de mesure (6) comprennent une balance.

5. Installation selon l'une quelconque des revendications précédentes, **caractérisée en ce que** les équipements de mesure (6 ; 28, 29, 30, 31, 34, 46) comprennent des capteurs optiques, en particulier des capteurs de section lumineuse au laser et/ou des capteurs de temps de vol et/ou des caméras 2D et/ou des caméras 3D.

6. Installation selon l'une quelconque des revendications précédentes, **caractérisée en ce que** le démontage est effectué de manière partiellement automatisée et que le robot (7 ; 37) est un robot collaboratif destiné à assister un travailleur humain (10), dans laquelle un appareil de communication de données (11), en particulier des lunettes intelligentes munies d'une caméra, d'un haut-parleur et d'un microphone, est prévu pour la communication entre le travailleur (10) et l'installation.

7. Installation selon l'une quelconque des revendications précédentes, **caractérisée en ce que** l'installation comprend en outre un poste (2) pour débarrasser l'appareil (1') des lubrifiants coulants à solides et/ou des fluides liquides ou gazeux et/ou des substances dangereuses, qui est placé en amont du poste de démontage (3).

8. Installation selon l'une quelconque des revendications précédentes, **caractérisée en ce que** le poste de démontage (3) comprend en outre un dispositif de contrôle (16) pour contrôler le bon fonctionnement des composants démontés.

9. Installation selon l'une quelconque des revendications précédentes, **caractérisée en ce que** la tête d'instrument (38) du robot (7 ; 37) est échangeable.

10. Installation selon l'une quelconque des revendications 1 à 8, **caractérisée en ce que** l'installation comprend plusieurs robots (7 ; 37) ayant différentes fonctions.

11. Procédé pour le démontage partiellement ou entièrement automatisé d'appareils (1), en particulier de véhicules automobiles, en vue de récupérer des composants et des fractions de matériaux, comprenant les étapes suivantes qui sont à effectuer une ou plusieurs fois selon les besoins de la séquence de démontage, consistant à :
positionner l'appareil (1") dans une zone d'usinage (20) au moyen de premiers dispositifs de manipulation (4 ; 39, 40) ;
mesurer in situ des propriétés de l'appareil (1"), de ses composants et de ses matériaux au moyen d'équipements de mesure (6 ; 28, 29, 30, 31, 34, 46) ;
traiter les données obtenues par les mesures pour l'identification et la classification de composants et/ou de fractions de matériaux de l'appareil (1") et pour la détermination d'une séquence de démontage au moyen d'un équipement de commande ;
démonter des composants et/ou des fractions de matériaux de l'appareil (1") au moyen d'outils (8, 9) guidés par au moins un robot (7 ; 37) ; et
amener les composants et/ou les fractions de matériaux à des dispositifs de réception (13, 14, 15) associés à différentes fractions de tri au moyen de deuxièmes dispositifs de manipulation (5 ; 47, 48) en fonction de l'identification et de la classification effectuées ;
**caractérisé en ce que** les équipements de mesure (6 ; 28, 29, 30, 31, 34, 46) mesurent aussi bien des propriétés géométriques que chimiques et/ou physiques de l'appareil (1"), de ses composants et de ses matériaux ainsi que les liens réciproques entre les composants ;
l'identification et la classification des composants et/ou des fractions de matériaux sont effectuées en fonction de leurs propriétés déterminées par les mesures ;
des paramètres de procédé concernant la séquence et les outils (8, 9) à mettre en œuvre pour le démontage sont déterminés à partir des données obtenues par les mesures ; et
les données obtenues par les mesures sont stockées dans une banque de données pour la création systématique d'une base de données pour le démontage d'autres appareils.

12. Procédé selon la revendication 11, **caractérisé en ce que** la géométrie de la coque extérieure de l'appareil (1") est mesurée sur tous les côtés au début du démontage.

13. Procédé selon la revendication 11 ou 12, **caractérisé en ce qu'**un contrôle du bon fonctionnement des composants démontés est effectué.

14. Procédé selon l'une quelconque des revendications 11 à 13, **caractérisé en ce que** le démontage est effectué de manière partiellement automatisée et que le robot (7 ; 37) est un robot collaboratif qui assiste un travailleur humain (10).

15. Procédé selon l'une quelconque des revendications 11 à 14, **caractérisé en ce qu'**avant le démontage, l'appareil (1') est débarrassé des lubrifiants coulants à solides et/ou des fluides liquides ou gazeux et/ou des substances dangereuses.
